Europäisches Patentamt

European Patent Office

Office européen des brevets

(11) Veröffentlichungsnummer: **0 498 938 A2**

# EUROPÄISCHE PATENTANMELDUNG

(21) Anmeldenummer: **91119593.1**

(22) Anmeldetag: **16.11.91**

(51) Int. Cl.⁵: **H04N 7/137**

(30) Priorität: **11.02.91 DE 4104067**

(43) Veröffentlichungstag der Anmeldung:
**19.08.92 Patentblatt 92/34**

(84) Benannte Vertragsstaaten:
**FR GB IT NL SE**

(71) Anmelder: **TELENORMA GMBH**
**Mainzer Landstrasse 128-146**
**W-6000 Frankfurt/Main(DE)**

(72) Erfinder: **Kummerow, Thomas, Dr.-Ing.**
**Limesstrasse 20**
**W-6293 Wehrheim(DE)**
Erfinder: **Mohr, Peter, Dipl.-Ing.**
**Wiesenweg 14**
**W-6270 Idstein 4(DE)**

(54) Verfahren zur Verbesserung der Qualität von Bewegungsvekforen für digitale Bildübertragung.

(57) 2.1 Mit dem Verfahren soll erreicht werden, daß fehlerhafte Bewegungsvektoren erkannt werden können, ohne daßumfangreiche Rechenoperationen angestellt werden müssen. Dabei sollen Bewegungsvektoren, welche einen nichtplausiblen Wert aufweisen, ersetzt werden durch einen Bewegungsvektor, der durch Vergleich ermittelt wurde, und dem richtigen Wert sehr nahe kommt.

2.2 Der ermittelte Bewegungsvektor eines Bildblockes wird mit den Bewegungsvektoren der benachbarten Bildblöcke verglichen und auf Plausibilität geprüft. Die Werte der von Nachbarblöcken stammenden Bewegungsvektoren mitannähernd jeweils gleich großen Beträgen und gleicher Richtungwerden gesondert zusammengefaßt, wobei eine Gewichtung vorgenommen wird, die vom Nachbarschaftsverhältnis und von der Ähnlichkeit der Bewegungsvektoren abhängt. Von den Beträgen und Richtungen der so klassifizierten Bewegungsvektoren werden Mittelwerte gebildet, denen außerdem eine Gewichtung zugeordnet wird. Es wird derjenige mittlere Beegungsvektor zum Vergleich mit dem Bewegungsvektor des gerade bearbeiteten Bildblockes herangezogen, dem das größt12e Gewicht zugeordnet ist. Diese mittlere Bewegungsvektor wird als Ersatz für einen von plausiblen Werten zu stark abweichenden Bewegungsvektor des jeweils betrachteten Bildblockes eingesetzt.

2.3 Ein in Bildblöcke unterteiltes Bild wird so bearbeitet, daß nicht plausible Bewegungsvektorene-liminiert werden. Dies führt zu einer Erhöhung der Bildqualität bei schmalbandiger digitaler Bildübertragung.

Fig. 1

Die Erfindung betrifft ein Verfahren zur Verbesserung der Qualität von Bewegungsvektoren für digitale Bildübertragung nach dem Oberbegriff des Patentanspruchs 1.

In der EP-OS 0236 519 wird eine bewegungskompensierende Feld-Interpolations-Methode beschrieben, wobei eine hierarchisch strukturierte Bewegungs-Schätzeinrichtung angewendet wird. Dort wird auf Seite 5 unter Punkt 3.2 beschrieben, daß das Ergebnis einer Bewegungsschätzung bei Bildübertragungen stark abweichen kann von der wirklich stattfindenden Bewegung. Dies wird damit begründet, daß das mathematische Modell, welches einem Schätz-Algorithmus zugrunde gelegt wird, von dem aktuellen Bildsignal abweichen kann. Deshalb wird vorgeschlagen, die Schätz-Prozeduren mehrfach zu wiederholen, bis ein zufriedenstellend genaues Ergebnis erreicht wird. Bei einer derartigen Verfahrensweise wird der Aufwand an Rechenzeit relativ hoch. Es ist außerdem nicht ganz auszuschließen, daß einzelne Bildblöcke sporadisch fehlerhaft berechnet werden, wodurch eine Minderung der Bildqualität, insbesondere bei schmalbandiger Bildübertragung entstehen kann.

Die Aufgabe der Erfindung besteht darin, ein Verfahren anzugeben, womit es möglich ist, fehlerhafte Bewegungsvektoren zu erkennen, ohne daß Rechenoperationen wiederholt werden müssen. Dabei sollen Bewegungsvektoren, welche einen nicht plausiblen Wert aufweisen, ersetzt werden durch einen Bewegungsvektor, der durch Vergleich ermittelt wurde und dem richtigen Wert sehr nahe kommt.

Zur Lösung dieser Aufgabe ist eine Merkmalskombination vorgesehen, wie sie im Patentanspruch 1 angegeben ist. Damit wird in vorteilhafter Weise erreicht, daß ein in Bildblöcke unterteiltes Bild so bearbeitet wird, daß nicht plausible Bewegungsvektoren eliminiert werden. Dies führt zu einer Erhöhung der Bildqualität bei schmalbandiger digitaler Bildübertragung.

In den Unteransprüchen sind vorteilhafte Weiterbildungen der Erfindung angegeben.

Ein Ausführungsbeispiel der Erfindung wird nachfolgend anhand von Zeichnungen näher erläutert.

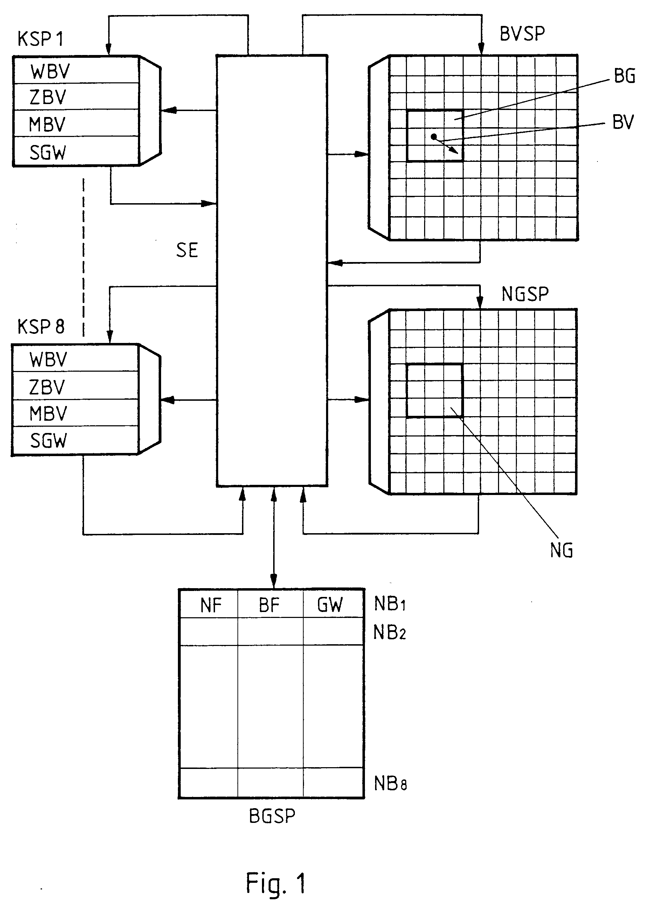

Es zeigt Figur 1 ein Blockschaltbild, der an dem Verfahren beteiligten Steuer- und Speichereinrichtungen.

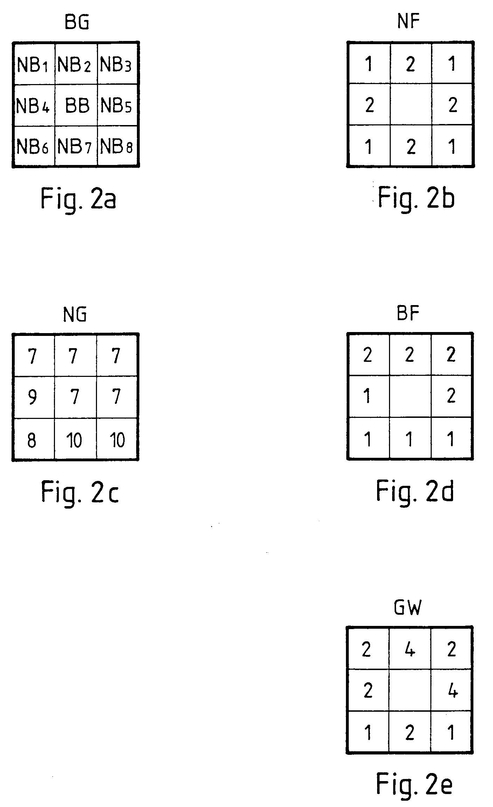

Figur 2 unter Figur 1 das Schema einer Bildblockgruppe

In der Figur 1 ist dargestellt, daß eine Steuereinrichtung SE auf mehrere Speichereinrichtungen Zugriff hat. Die Funktionen, welche diese Speichereinrichtungen im einzelnen bei der Durchführung des Verfahrens ausüben, werden nachfolgend im einzelnen beschrieben.

Die Bewegungsvektoren BV der einzelnen Bildblöcke BB werden zunächst nach einem bekannten Verfahren einzeln ermittelt und in einen Bewegungsvektorspeicher BVSP eingetragen, wo für jeden Bildblock BB eine Speicherzelle vorgesehen ist. Wenn alle durch Bewegungs-Vektor-Schätzung ermittelten Koordinaten der Bewegungsvektoren BV in den Bewegungsvektorspeicher BVSP eingetragen sind, wird jeder einzelne Bildblock BB in einem anschließenden Arbeitsgang bearbeitet, um die Werte des betreffenden Bewegungsvektors BV mit den Werten der Bewegungsvektoren BV der benachbarten Bildblöcke BB, also der Nachbarblöcke NB, zu vergleichen. Dabei werden Strukturen gebildet, wie sie beispielsweise in der Figur 2 a dargestellt ist. Der Einfachheit halber wird bei der Beschreibung des Verfahrens nur die unmittelbare Umgebung eines zu bearbeitenden Bildblockes BB beschrieben. Es ist jedoch auch denkbar, eine Struktur anzuwenden, bei der weiter entfernte Nachbarblöcke berücksichtigt werden, so daß sich Blockgruppen BG ergeben, die größer sind, als die hier dargestellte Neuner-Konfiguration.

Es sei angenommen, daß der in der Mitte einer Blockgruppe BG liegende Bildblock BB bearbeitet werden soll, wobei die Nachbarblöcke NB 1 bis NB 8 den betreffenden Bildblock BB umgeben, wie dies in Figur 2 a dargestellt ist. Für diesen Fall wird das Nachbarschaftsverhältnis ermittelt und in Form eines Nachbarschaftsfaktors NF in einem Blockgruppenspeicher BGSP abgelegt, der temporär für diejenige Blockgruppe BG benutzt wird, in welcher der zu bearbeitende Bildblock BB liegt. In den Blockgruppenspeicher BGSP werden demnach Werte für den Nachbarschaftsfaktor NF eingetragen, die den einzelnen Nachbarblöcken NB 1 bis NB 8 zugeordnet sind. In Figur 2 b ist dargestellt, daß die Nachbarschaftsfaktoren NF abhängig sind davon, in welcher Weise ein Nachbarblock NB 1 bis NB 8 an den zu bearbeitenden Bildblock BB angrenzt. Die Nachbarschaftsfaktoren NF derjenigen Nachbarblöcke NB 2, NB 4, NB 5 und NB 7 nach Figur 2 a sind in diesem Beispiel höher als die der übrigen Nachbarblöcke NB 1, NB 3, NB 6 und NB 8, weil diese nur an einer Ecke mit dem zu bearbeitenden Bildblock BB in Verbindung stehen.

Außerdem wird bei der Abarbeitung des Bewegungsvektorspeichers BVSP festgestellt, an welchen Stellen die Bildblöcke BB Bewegungsvektoren BV aufweisen, welche annähernd gleiche Richtung und gleiche Beträge aufweisen. Die Verschiedenartigkeit der Bewegungsvektoren BV wird dabei fortlaufend nummeriert, so daß für jeden Bewegungsvektor BV, der von einem vorhergehenden abweicht, eine andere fortlaufende Nummer vergeben wird. Diese Nummer wird jedem Bildblock BB zugeordnet und in einem Nummerngruppenspeicher NGSP abgelegt. Wenn sich dabei herausstellt, daß ein Bildblock BB einen Bewegungsvektor BV aufweist, dessen Wert einem bereits nummerierten Bewegungsvektor BV sehr nahe kommt, so erhält dieser Bildblock BB die gleiche Nummerierung. Wenn auf diese Weise alle Bildblöcke BB ihren Bewegungsvektoren BV entsprechend klassifiziert sind, so ist im Nummergruppenspeicher NGSP einem jedem Bildblock BB zugeordnet eine Nummer eingetragen. Für eine Blockgruppe BG entsteht somit eine an entsprechender Stelle liegende Nummerngruppe NG, wie dies in Figur 2 c dargestellt ist. Aus der Figur 2 c ist ersichtlich, daß den einzelnen Bildblöcken BB bzw. NB zugeordnet gleiche oder ungleiche Nummern eingetragen sein können. Wenn gleiche Nummern, z. B. 7 oder 10, vorliegen, so bedeutet dies, daß bei den entsprechenden Bildblöcken annähernd gleiche Bewegungsvektoren vorliegen.

Aus den Nummern, die, wie zuvor beschrieben, durch eine Klassifizierung der Bewegungsvektoren BV entstanden sind, wird nun für jeden der Nachbarblöcke NB 1 bis NB 8 ein Blockfaktor BF errechnet. Aus Figur 2 d ist ersichtlich, daß der Blockfaktor BF einen größeren Wert hat, wenn die Nummer gleich ist wie bei dem gerade in Bearbeitung befindlichen Bildblock BB. Es wird also aus der in Figur 2 c dargestellten Nummergruppe NG derjenigen Blockgruppe BG in welcher sich der zu bearbeitende Bildblock BB befindet, eine Gruppe von Blockfaktoren BF gebildet, wie diese in Figur 2 d dargestellt ist. Dabei wird allerdings nur berücksichtigt, ob die den Bildblöcken BB bzw. NB zugeordneten Nummern einander gleich sind oder nicht. Deshalb ist für ungleiche Nummern in dem einem Nachbarblock NB zugeordneten Feld eine 1 eingetragen, wenn die Nummer (8, 9, 10) von der Nummer (7) des zu bearbeitenden Bildblockes BB abweicht. In den Feldern, die den übrigen Nachbarblöcken NB 1, NB 2, NB 3 und NB 5 zugeordnet sind, ist als Blockfaktor BF eine 2 eingetragen, weil deren Nummern (7) übereinstimmen mit der Nummer (7) die dem zu bearbeitenden Bildblock BB zugeordnet ist. Diese Blockfaktoren BF werden dem jeweiligen Nachbarblock NB 1 bis NB 8 zugeordnet eingespeichert, so daß sie auch dem entsprechenden Nachbarschaftsfaktor NF zugeordnet sind.

Aus den im Blockgruppenspeicher BGSP abgelegten Werten für den Nachbarschaftsfaktor NF und den Blockfaktor BF wird nun für jeden Nachbarblock NB 1 bis NB 8 ein Gewicht GW ermittelt, indem beispielsweise der Nachbarschaftsfaktor NF mit dem Blockfaktor BF multipliziert wird, um das Gewicht GW zu erhalten. Es ergibt sich dann für die Blockgruppe BG, in welcher sich der zu bearbeitende Bildblock BB befindet, eine Gewichtsverteilung, wie sie in Figur 2 e angegeben ist.

Wenn diese Prozeduren abgeschlossen sind, werden die den Nachbarblöcken NB 1 bis NB 8 zugeordneten Bewegungsvektoren BV aus dem Bewegungsvektorspeicher BVSP einzeln nacheinander ausgelesen und in eine Gruppe von Klassenspeichern KSP 1 bis KSP 8 eingetragen, deren Anzahl maximal der Anzahl von Nachbarblöcken NB 1 bis NB 8 entspricht. Dabei werden zunächst die Werte des Bewegungsvektors BV des ersten Nachbarblockes NB 1 in den Klassenspeicher KSP 1 als Bewegungsvektorwert WBV 1 eingetragen. Als Bewegungsvektoranzahl ZBV 1 wird eine 1 eingetragen. Wenn es sich herausstellen sollte, daß die Werte des Bewegungsvektors BV für den zweiten Nachbarblock NB 2 annähernd gleich den Werten des Bewegungsvektors BV vom ersten Nachbarblock NB 1 sind, so werden auch diese Werte des Bewegungsvektores BV vom zweiten Nachbarblock NB 2 in den ersten Klassenspeicher KSP 1 eingetragen, wobei eine Addition zu den bereits eingespeicherten Werten stattfindet. In der für die Bewegungsvektorwerte WBV vorgesehenen Spalte ist dann die Summe beider Bewegungsvektoren BV eingetragen. Die Bewegungsvektoranzahl ZBV im ersten Klassenspeicher KSP 1 wird dann um 1 erhöht, so daß als Summe eine 2 erscheint. Wenn die Werte eines Bewegungsvektors BV von einem Nachbarblock, z. B. NB 4, von den Werten des vorherigen oder eines anderen Nachbarblockes NB abweichen, so wird dafür ein weiterer Klassenspeicher, z. B. KSP 2 (nicht dargestellt) in Anspruch genommen. Da bei dem betrachteten Beispiel nur 8 Nachbarblöcke NB 1 bis NB 8 vorhanden sind, können nur max. 8 verschiedene Werte von Bewegungsvektoren BV auftreten, so daß nur max. 8 verschiedene Klassenspeicher KSP 1 bis KSP 8 erforderlich ind.

Jedesmal dann, wenn die Werte eines Nachbarblockes, z. B. NB 1, in einem der Klassenspeicher, z. B. KSP 1, übernommen werden, wird auch aus dem Blockgruppenspeicher BGSP das zu diesem Nachbarblock NB 1 gehörende Gewicht GW in den betreffenden Klassenspeicher KSP 1 eingetragen. Wenn sich dort schon ein Gewichtswert GW befindet, so wird das neu hinzukommende Gewicht GW hinzuaddiert, so daß sich nach Abschluß der Bearbeitung einer Blockgruppe BG eine Gewichtssumme SGW ergibt.

In jedem der einzelnen Klassenspeicher KSP 1 bis KSP 8 wird nach Abschluß der Behandlung einer Blockgruppe BG ein mittlerer Bewegungsvektor MBV errechnet, indem die Summe der Bewegungsvektorwerte WBV durch die Bewegungsvektoranzahl ZBV dividiert wird. Somit liegt in jedem der Klassenspeicher KSP 1 bis KSP 8 ein mittlerer Bewegungsvektor MBV vor. Diese mittleren Bewegungsvektoren MBV werden nun mit den Werten des Bewegungsvektors des bearbeiteten Bildblockes BB, wie er im Bewegungsvektorspeicher BVSP vorgefunden wird, verglichen. Wenn dabei eine Gleichheit festgestellt wird, so bleibt der im Bewegungsvektorspeicher BVSP enthaltene Bewegungsvektor unverändert.

Werden dagegen Abweichungen zwischen den Werten des Bewegungsvektors BV des behandelten Bildblockes BB und den Klassenspeichern KSP 1 bis KSP 8 eingespeicherten mittleren Bewegungsvektoren MBV festgestellt, so wird dabei herausgefunden, welcher der mittleren Bewegungsvektoren MBV den Werten des Bewegungsvektors des behandelten Bildblockes BB am nächsten kommt. Wird in einem der Klassenspeicher KSP 1 bis KSP 8 ein solcher mittlerer Bewegungsvektor MBV vorgefunden, so wird zusätzlich die Gewichtssumme SGW zur Beurteilung herangezogen. Beim Vorhandensein von mehreren mittleren Bewegungsvektoren MBV in unterschiedlichen Klassenspeichern KSP 1 bis KSP 8, welche nicht zu weit von dem Bewegungsvektor des betrachteten Bildbockes BB abweichen, wird derjenige als plausibel erkannt, dem die größte Gewichtssumme SGW zugeordnet ist. Ein solcher Bewegungsvektor BV wird dann anstelle des ursprünglich geschätzten Bewegungsvektors BV in die Speicherzelle des Bewegungsvektorspeicherg BVSP eingetragen. Nur dann, wenn unter den mittleren Bewegungsvektoren MBV keiner herausgefunden werden kann, der als plausibel gelten kann, wird der ursprünglich geschätzte Bewegungsvektor im Bewegungsvektorspeicher BVSP beibehalten.

Wenn auf diese Weise der gesamte Bewegungsvektorspeicher BVSP abgearbeitet ist, so sind die Bewegungsvektoren BV eines jeden Bildblockes BB mit ihrem Umfeld verglichen worden, so daß eine Qualitätsverbesserung aller Bewegungsvektoren BV durchgeführt worden ist. Die dabei im Nummergruppenspeicher NGSP eingetragenen Ziffern für jeden einzelnen Bildblock BB bleiben erhalten und werden bei der Bearbeitung des nächsten Bildes zugrunde gelegt und aktualisiert. Der Blockgruppenspeicher BGSP und die Klassenspeicher KSP 1 bis KSP 8 werden bei jedem Übergang von einer Blockgruppe BG zu einer anderen Blockgruppe BG wieder neu den jeweils neuen Bildblöcken BB zugeordnet. Auf die vorbeschriebene Weise entstehen im Bewegungsvektorspeicher BVSP Werte für Bewegungsvektoren BV, welche nur gering von der tatsächlichen Bewegung abweichen. Im Nummerngruppenspeicher NGSP sind für jeden Bildblock BB Daten enthalten, welche die Bewegungsstruktur des jeweils vorangegangenen Bildes für die Bearbeitung des nächsten Bildes beinhalten.

**Patentansprüche**

1. Verfahren zur Verbesserung der Qualität von Bewegungsvektoren für digitale Bildübertragung mit niedriger Bit-Rate, wobei nur die Informationen über die zwischen den einzelnen Bildern bestehenden Unterschiede gesendet werden, und ein Bild in Blöcke zerlegt wird, zu denen jeweils ein Bewegungsvektor ermittelt wird, der angibt, in welcher Richtung und um welchen Betrag sich der betreffende Teil eines Bildes gegenüber dem vorherigen Bild bewegt hat,
dadurch gekennzeichnet,
daß der ermittelte Bewegungsvektor (BV) eines Bildblockes (BB) mit den Bewegungsvektoren (BV) der benachbarten Bildblöcke (NB) verglichen und auf Plausibilität geprüft wird,
daß zu diesem Zweck jeweils die Werte der von Nachbarblöcken (NB) stammenden Bewegungsvektoren (BV) mit annähernd gleich großen Beträgen und gleicher Richtung gesondert zusammengefaßt werden, wobei eine Gewichtung vorgenommen wird, die vom Nachbarschaftsverhältnis und von der Åhnlichkeit der Bewegungsvektoren (BV) abhängt, daß von den Beträgen und Richtungen der so klassifizierten Bewegungsvektoren (BV) Mittelwerte gebildet werden, so daß für jede Klasse ein repräsentativer mittlerer Bewegungsvektor (MBV) entsteht,
daß derjenige mittlere Bewegungsvektor (MBV) zum Vergleich mit dem Bewegungsvektor (BV) des gerade bearbeiteten Bildbockes (BB) herangezogen wird, der aus den einzelnen gleichartigen Bewegungsvektoren (BV) einer Klasse mit dem größen Gewicht (SGW 1 bis SGW 8) errechnet wurde, und daß dieser mittlere Bewegungsvektor (MBV) als Ersatz für einen von plausiblen Werten abweichenden Bewegungsvektor (BV) des jeweils betrachteten Bildblokkes (BB) eingesetzt wird.

2. Verfahren nach Anspruch 1,
dadurch gekennzeichnet,
daß mehrere Bildblöcke (BB) zu einer Blockgruppe (BG) zusammengefaßt werden, wenn festgestellt wird, daß sich diese Bildblöcke (BB) zusammen in gleicher Richtung und um den gleichen Betrag bewegt haben, und daß solche Blockgruppen (BG) entsprechen hoch gewichtet werden.

3. Verfahren nach Anspruch 1,
dadurch gekennzeichnet,
daß beim Vergleich der Bewegungsvektoren (BV) benachbarte Bildblöcke (NB) nicht berücksichtigt werden, wenn sie am Bildrand oder am Rand einer bewegten Zone liegen.

Fig. 1

BG

| NB$_1$ | NB$_2$ | NB$_3$ |
|---|---|---|
| NB$_4$ | BB | NB$_5$ |
| NB$_6$ | NB$_7$ | NB$_8$ |

Fig. 2a

NF

| 1 | 2 | 1 |
|---|---|---|
| 2 | | 2 |
| 1 | 2 | 1 |

Fig. 2b

NG

| 7 | 7 | 7 |
|---|---|---|
| 9 | 7 | 7 |
| 8 | 10 | 10 |

Fig. 2c

BF

| 2 | 2 | 2 |
|---|---|---|
| 1 | | 2 |
| 1 | 1 | 1 |

Fig. 2d

GW

| 2 | 4 | 2 |
|---|---|---|
| 2 | | 4 |
| 1 | 2 | 1 |

Fig. 2e